# EUROPÄISCHE PATENTANMELDUNG

(11) **EP 3 700 146 A1**
(43) Veröffentlichungstag der Anmeldung: **26.08.2020**
(21) Anmeldenummer: 19158820.1
(22) Anmeldetag: 22.02.2019
(51) Int. Cl.: H04L 12/851, H04L 12/863, H04L 12/927, H04L 12/931, H04L 12/841

(54) **VERFAHREN ZUM BETRIEB EINES KOMMUNIKATIONSSYSTEMS ZUR ÜBERMITTLUNG ZEITKRITISCHER DATEN UND KOMMUNIKATIONSGERÄT**

(71) Anmelder: Siemens Aktiengesellschaft, 80333 München (DE)
(72) Erfinder: Steindl, Günter, 92284 Poppenricht (DE)

(57) **Zusammenfassung**

In einem Kommunikationssystem zur Übermittlung zeitkritischer Daten werden erste Datagramme (301) bei ihrer Übermittlung jeweils in erste Sendewarteschlangen sendender bzw. weiterleitender Kommunikationsgeräte (100, 201-205) eingefügt (11), während zweite Datagramme (302) bei ihrer Übermittlung jeweils in zweite Sendewarteschlangen sendender und/oder weiterleitender Kommunikationsgeräte (100, 201-205) eingefügt werden (21). Ein Weiterleiten der zweiten Datagramme (302) wird durch die weiterleitenden Kommunikationsgeräte (100) jeweils bei Empfang eines ersten Datagramms (301) abgebrochen (27) und erst nach Weiterleiten des jeweiligen ersten Datagrams fortgesetzt (25). Nur die ersten Datagramme (301) werden durch die weiterleitenden Kommunikationsgeräte (100) jeweils vor vollständigem Empfang weitergeleitet (13), sobald eine jeweilige Zieladresse verarbeitbar ist (12). Die zweiten Datagramme (302) werden durch die weiterleitenden Kommunikationsgeräte (100) jeweils vor vollständigem Empfang zwischengespeichert (22) und erst nach vollständigem Empfang weitergeleitet (23-27).

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Aus EP 2 324 601 B1 ist ein Verfahren zum Übertragen von Datenpaketen in einem Kommunikationsnetz bekannt, bei dem erste Datenpakete mit einer niedrigen Priorität zwischen einem Sender und einem Empfänger des Kommunikationsnetzes übertragen werden. Zweite Datenpakete mit einer hohen Priorität werden gegenüber den ersten Datenpaketen bevorzugt zwischen dem Sender und dem Empfänger übertragen. Bei einem von dem Sender an den Empfänger zu übertragenden zweiten Datenpaket wird überprüft, ob gegenwärtig ein erstes Datenpaket übertragen wird. Wenn die Überprüfung, ob gegenwärtig ein erstes Datenpaket übertragen wird, positiv ist, wird die Übertragung des ersten Datenpakets abgebrochen oder unterbrochen, und das zweite Datenpaket wird im Anschluss daran übertragen. Nach der Übertragung des zweiten Datenpakets wird die Übertragung des nicht übertragenen ersten Datenpakets wiederholt oder des Rests des unvollständig übertragenen ersten Datenpakets veranlasst. Jedes erste Datenpaket wird parallel zu einem Sendevorgang in einem Zwischenspeicher gespeichert und erst nach einer vollständigen Übertragung des ersten Datenpakets an den Empfänger aus dem Zwischenspeicher gelöscht.

In EP 2 538 619 B1 ist ein Verfahren zur Übertragung von Datenpaketen mit mehreren Datenframes in einem Ethernet-Automatisierungsnetzwerk beschrieben, bei dem nach einem Empfang eines ersten Datenpakets mit einer ersten Priorität durch einen Sender ein Start eines Sendevorgangs des ersten Datenpakets vom Sender zu einem Empfänger erfolgt. Bei einem Empfang eines an den Empfänger zu übertragenden zweiten Datenpakets mit einer zweiten Priorität, die höher als die erste Priorität ist, erfolgt ein Abbruch des Sendevorgangs des ersten Datenpakets innerhalb eines der Datenframes des ersten Datenpakets, der sich zu dem Zeitpunkt des Empfangs des zweiten Datenpakets im Sendevorgang befindet. Danach wird das zweite Datenpaket vom Sender zum Empfänger übertragen.

Entsprechend EP 3 038 325 A1 werden zur Datenübermittlung in einem Kommunikationsnetz eines industriellen Automatisierungssystems erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste und zweite Teilintervall unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

WO 2018/166576 A1 betrifft ein Verfahren und ein Netzelement zur zeitgesteuerten Übertragung von Datenpaketen in einem Time-Sensitive Network, das mehrere einzelne Netzelemente umfasst. Jedem Netzelement ist eine Zeitablaufsteuerung zur Realisierung vorgeplanter, gleichgroßer Übermittlungszeitfenster zugeordnet. Die Netzelemente verfügen jeweils über einen eigenen unabhängigen Zeitmesser, wobei die Übermittlungszeitfenster bei allen Netzelementen zu denselben Zeitpunkten beginnen und enden. Eine Übertragung eines Datenpakets von einem Netzelement zu einem darauffolgenden Netzelement erfolgt in dem Zeitfenster, welches dem Zeitfenster folgt, in dem dieses Datenpaket von einem vorhergehenden Netzelement empfangen wurde. Jedes Netzelement kann für den eigenen unabhängigen Zeitmesser einem Verzögerungswert bestimmen, zu welchem Zeitpunkt das nächste Sendefenster beginnt bzw. endet. Darüber hinaus ist aus WO 2018/166576 A1 bekannt, dass ein Cut-Through Switching in Kombination mit Time-Aware Shapern (TAS) genutzt wird, um Echtzeit-Leistungsfähigkeit mit niedriger Latenz und geringer Verzögerungsvarianz (Jitter) zu erzielen.

Bei Switching mit Cut-Through werden Datenrahmen (Frames) durch Switches jeweils sofort weitergeleitet, sobald eine jeweilige Ziel-Adresse verarbeitbar ist. Somit werden Datenrahmen noch vor ihrem vollständigen Empfang und ohne Fehlererkennung weitergeleitet. Hieraus resultiert eine besonders geringe Latenz, die unabhängig von einer jeweiligen Datenrahmen- bzw. Datenpaketlänge ist. Unter Switching mit Cut-Through wird nachfolgend insbesondere ein direktes Weiterleiten eines Datenrahmens an einen freien Port bzw. ein verzögertes Weiterleiten an einen in Kürze freiwerdenden Port verstanden. Eine Behandlung von Empfangsfehlern erfolgt empfängerseitig, beispielsweise durch Markieren eines Datenrahmens als fehlerhaft, insbesondere durch Erzeugung eines Alignment-Fehlers, und idealerweise zusätzlich durch Verkürzen des Datenrahmens. Entsprechend Delayed Cut-Through kann ein Switching mit Cut-Through bei frei werdendem Ziel-Port auch während eines Empfangs von Datenrahmen aus einem Übermittlungsmodus mit Store-and-Forward gestartet werden.

Da Switching mit Cut-Through dazu führt, dass übermittelte Datenrahmen gleichzeitig in mehreren Bridges bzw. Switches verarbeitet werden, ist bislang keine zusätzliche Anwendung von Preemption-Verfahren zur Datenübermittlung möglich. Preemption-Verfahren zielen nämlich zugunsten einer vorgezogenen Übermittlung bevorrechtigter Datenrahmen auf eine Pausierung einer Übermittlung von Datenrahmen bzw. eine Zwischenspeicherung von Datenrahmen sowie eine spätere Fortsetzung ihrer Übermittlung ab.

Der vorliegenden Erfindung liegt die Aufgabe zugrunde, ein Verfahren zum Betrieb eines Kommunikationssystems zur Übermittlung zeitkritischer Daten schaffen, das eine gleichzeitige Nutzung von Switching mit Cut-Through und von Preemption-Verfahren ermöglicht, und geeignete Vorrichtung zur Durchführung des Verfahrens anzugeben.

Diese Aufgabe wird erfindungsgemäß durch ein Verfahren mit den in Anspruch 1 angegebenen Merkmalen und durch ein Kommunikationsgerät mit den in Anspruch 10 angegebenen Merkmalen gelöst. Vorteilhafte Weiterbildungen sind in den abhängigen Ansprüchen angegeben.

Entsprechend dem erfindungsgemäßen Verfahren zum Betrieb eines Kommunikationssystems zur Übermittlung zeitkritischer Daten werden Datagramme, insbesondere Sicherungsschicht-Datenrahmen oder Vermittlungsschicht-Datenpakete, von ersten Kommunikationsgeräten an ersten Netzknoten zu zweiten Kommunikationsgeräten an zweiten Netzknoten übermittelt und Uhrzeiteinstellungen an allen Netzknoten synchronisiert. Während erste Datagramme bei ihrer Übermittlung jeweils in erste Sendewarteschlangen sendender bzw. weiterleitender Kommunikationsgeräte eingefügt werden, werden zweite Datagramme bei ihrer Übermittlung jeweils in zweite Sendewarteschlangen sendender bzw. weiterleitender Kommunikationsgeräte eingefügt. Als sendende bzw. weiterleitende Kommunikationsgeräte werden insbesondere Bridges oder Switches verwendet. Bei Empfang eines ersten Datagramms wird jeweils ein Weiterleiten der zweiten Datagramme durch die weiterleitenden Kommunikationsgeräte abgebrochen und erst nach Weiterleiten des jeweiligen ersten Datagrams fortgesetzt.

Erfindungsgemäß werden nur die ersten Datagramme durch die weiterleitenden Kommunikationsgeräte jeweils vor vollständigem Empfang weitergeleitet, sobald eine jeweilige Zieladresse verarbeitbar ist. Dagegen werden die zweiten Datagramme durch die weiterleitenden Kommunikationsgeräte jeweils vor vollständigem Empfang zwischengespeichert und erst nach vollständigem Empfang weitergeleitet. Vorzugsweise werden die zweiten Datagramme durch die weiterleitenden Kommunikationsgeräte jeweils zur Fehlerüberprüfung zwischengespeichert und erst nach vollständigem fehlerfreien Empfang weitergeleitet. Vorteilhafterweise wird Cut-Through selektiv nur für bevorrechtigte Sendewarteschlangen (Queues) freigegeben, während für unterbrechbare Sendewarteschlangen nur Store-and-Forward genutzt werden darf.

Entsprechend einer bevorzugten Ausgestaltung der vorliegenden Erfindung werden die Datagramme innerhalb vorgegebener Zeitintervalle übermittelt und die vorgegebenen Zeitintervalle an allen Netzknoten synchronisiert. Insbesondere werden die ersten Datagramme während erster periodischer Zeitintervalle übermittelt, während die zweiten Datagramme während zweiter periodischer Zeitintervalle übermittelt werden. Vorteilhafterweise werden die ersten Datagramme einer ersten Kategorie zugeordnet, für deren Übermittlung erste System-Ressourcen innerhalb des Kommunikationssystems reserviert werden. In diesem Fall werden die zweiten Datagramme einer zweiten Kategorie zugeordnet, für deren Übermittlung zweite System-Ressourcen innerhalb des Kommunikationssystems reserviert werden. Für die Übermittlung der ersten Datagramme bzw. der zweiten Datagramme reservierte Ressourcen können insbesondere nutzbare Übertragungszeitfenster, Bandbreite, zugesicherte maximale Latenz, Queue-Anzahl, Queue-Cache bzw. Adress-Cache in Switches oder Bridges umfassen.

Die Übermittlung der ersten Datagramme wird vorzugsweise mittels Frame Preemption, insbesondere gemäß IEEE 802.1Q-2018, und Time-Aware Shaper, insbesondere gemäß IEEE 802.1Q-2018, gesteuert. Dagegen wird die Übermittlung der zweiten Datagramme vorteilhafterweise mittels Credit-Based Shaper, insbesondere gemäß IEEE 802.1Q-2018, Burst Limiting Shaper, Peristaltic Shaper oder Priority-Based Shaper gesteuert, oder die zweiten Datagramme werden entsprechend Best Effort übermittelt. Entsprechend einer besonders bevorzugten Ausgestaltung der vorliegenden Erfindung sind die ersten Kommunikationsgeräte über ein Time-Sensitive Network, insbesondere entsprechend IEEE802.3-2018, IEEE 802.1Q-2018, IEEE 802.1AB-2016, IEEE 802.1AS-2011, IEEE 802.1BA-2011 und/oder IEEE 802.1CB-2017, mit den zweiten Kommunikationsgeräten verbunden.

Das erfindungsgemäße Kommunikationsgerät ist zur Durchführung eines Verfahrens entsprechend vorangehenden Ausführungen vorgesehen und umfasst mehrere Anschlüsse zur Verbindung mit weiteren Kommunikationsgeräten sowie ein Koppelelement, durch das die Anschlüsse schaltbar miteinander verbindbar sind. Das Kommunikationsgerät ist dafür ausgestaltet und eingerichtet, Datagramme von ersten Kommunikationsgeräten an ersten Netzknoten zu zweiten Kommunikationsgeräten an zweiten Netzknoten zu übermitteln und Uhrzeiteinstellungen mit anderen Netzknoten zu synchronisieren. Außerdem ist das Kommunikationsgerät dafür ausgestaltet und eingerichtet, erste Datagramme bei ihrer Übermittlung jeweils in erste Sendewarteschlangen sendender bzw. weiterleitender Kommunikationsgeräte einzufügen und zweite Datagramme bei ihrer Übermittlung jeweils in zweite Sendewarteschlangen sendender bzw. weiterleitender Kommunikationsgeräte einzufügen.

Darüber hinaus ist das erfindungsgemäße Kommunikationsgerät dafür ausgestaltet und eingerichtet, ein Weiterleiten der zweiten Datagramme durch die weiterleitenden Kommunikationsgeräte jeweils bei Empfang eines ersten Datagramms abzubrechen und erst nach Weiterleiten des jeweiligen ersten Datagrams fortzusetzen. Des Weiteren ist das Kommunikationsgerät dafür ausgestaltet und eingerichtet, nur die ersten Datagramme durch die weiterleitenden Kommunikationsgeräte jeweils vor vollständigem Empfang weiterzuleiten, sobald eine jeweilige Zieladresse verarbeitbar ist, und die zweiten Datagramme durch die weiterleitenden Kommunikationsgeräte jeweils vor vollständigem Empfang zwischenzuspeichern und erst nach vollständigem Empfang weiterzuleiten.

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationssystem für ein industrielles Automatisierungssystem,
- Figur 2: ein Ablaufdiagramm zur Übermittlung zeitkritischer Daten innerhalb des Kommunikationssystems gemäß Figur 1.

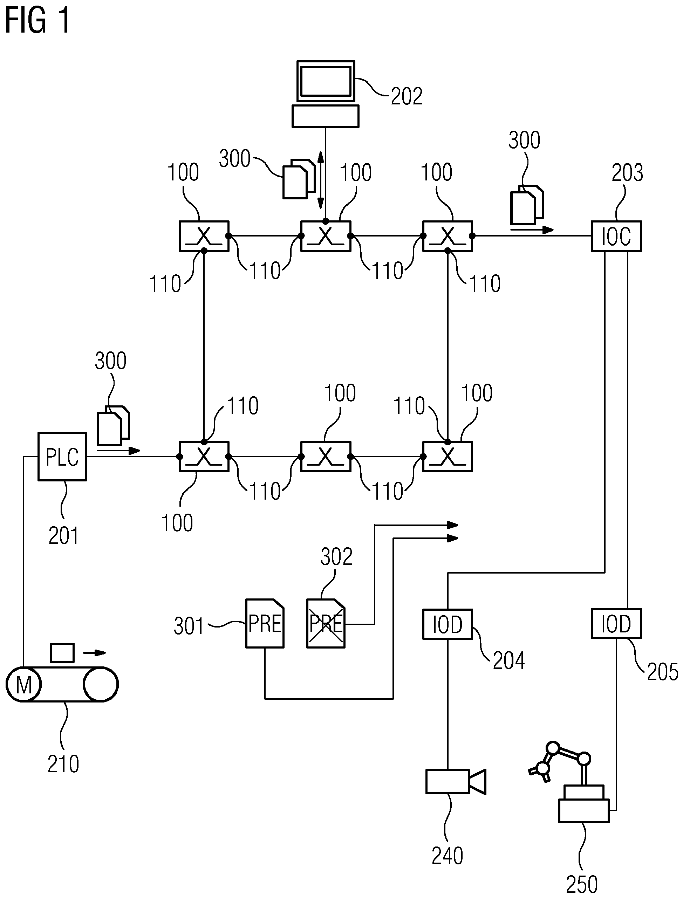

Das in Figur 1 dargestellte Kommunikationssystem für ein industrielles Automatisierungssystem umfasst mehrere Bridges oder Switches 100 als Datagramme weiterleitende Kommunikationsgeräte. Bridges bzw. Switches 100 umfassen jeweils mehrere Ports 110 sowie einen Backplane-Switch als Koppelelement und dienen insbesondere zum Anschluss von speicherprogrammierbaren Steuerungen 201, Bedien- und Beobachtungsstationen 202, I/O-Controllern 203 oder I/O-Modulen 204-205, die ebenfalls Kommunikationsgeräte bzw. Kommunikationsendgeräte darstellen. Im vorliegenden Ausführungsbeispiel ist das Kommunikationssystem als Time-Sensitive Network ausgestaltet, insbesondere entsprechend IEEE802.3-2018, IEEE 802.1Q-2018, IEEE 802.1AB-2016, IEEE 802.1AS-2011, IEEE 802.1BA-2011 bzw. IEEE 802.1CB-2017. Im vorliegenden Ausführungsbeispiel sind für jeden Port 110 eines sendenden bzw. weiterleitenden Kommunikationsgeräts 100, 201-205 zumindest 2 Sendewarteschlangen (Queues) vorgesehen.

Speicherprogrammierbare Steuerungen 201 umfassen typischerweise jeweils ein Kommunikationsmodul, eine Zentraleinheit sowie zumindest eine Eingabe/Ausgabe-Einheit dar. Eingabe/ Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung 201 mit einem Switch oder Router oder zusätzlich mit einem Feldbus verbunden werden. Die Eingabe/Ausgabe-Einheit dient einem Austausch von Steuerungs- und Messgrößen zwischen der speicherprogrammierbaren Steuerung 201 und einer durch die speicherprogrammierbare Steuerung 201 gesteuerten Maschine oder Vorrichtung 210. Die Zentraleinheit ist insbesondere für eine Ermittlung geeigneter Steuerungsgrößen aus erfassten Messgrößen vorgesehen. Obige Komponenten der speicherprogrammierbaren Steuerung 201 sind beispielsweise über ein Rückwandbus-System miteinander verbunden.

Auch die I/O-Module 204-205 sind zum Austausch von Steuerungs- und Messgrößen mit angeschlossenen Maschinen oder Vorrichtungen 240, 250 vorgesehen. Zur Steuerung der I/O-Module 204-205 ist beispielsweise pro Automatisierungszelle ein zugeordneter I/O-Controller 203 vorgesehen. Die I/O-Module 204-205 können grundsätzlich auch durch eine entfernte speicherprogrammierbaren Steuerung 201 angesteuert werden.

Eine Bedien- und Beobachtungsstation 202 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 202 zur Anzeige von Werten eines Regelungskreises und zur Veränderung von Regelungsparametern verwendet. Bedien- und Beobachtungsstationen 202 umfassen zumindest eine graphische Benutzerschnittstelle, ein Eingabegerät, eine Prozessoreinheit und ein Kommunikationsmodul.

Zur Übermittlung zeitkritischer Daten werden Datenrahmen (Frames) 300 von ersten Kommunikationsgeräten 201 an ersten Netzknoten zu zweiten Kommunikationsgeräten 202-205 an zweiten Netzknoten übermittelt. Im vorliegenden Ausführungsbeispiel werden erste Frames 301, die mittels Preemption, insbesondere gemäß IEEE 802.1Q-2018, bevorrechtigt übermittelt werden sollen, bei ihrer Übermittlung jeweils in erste Queues sendender bzw. weiterleitender Kommunikationsgeräte 100, 201-205 eingefügt. Demgegenüber werden zweite Frames 302, die nicht für eine bevorrechtigte Übermittlung mittels Preemption vorgesehen sind, bei ihrer Übermittlung jeweils in zweite Queues sendender bzw. weiterleitender Kommunikationsgeräte 100, 201-205 eingefügt.

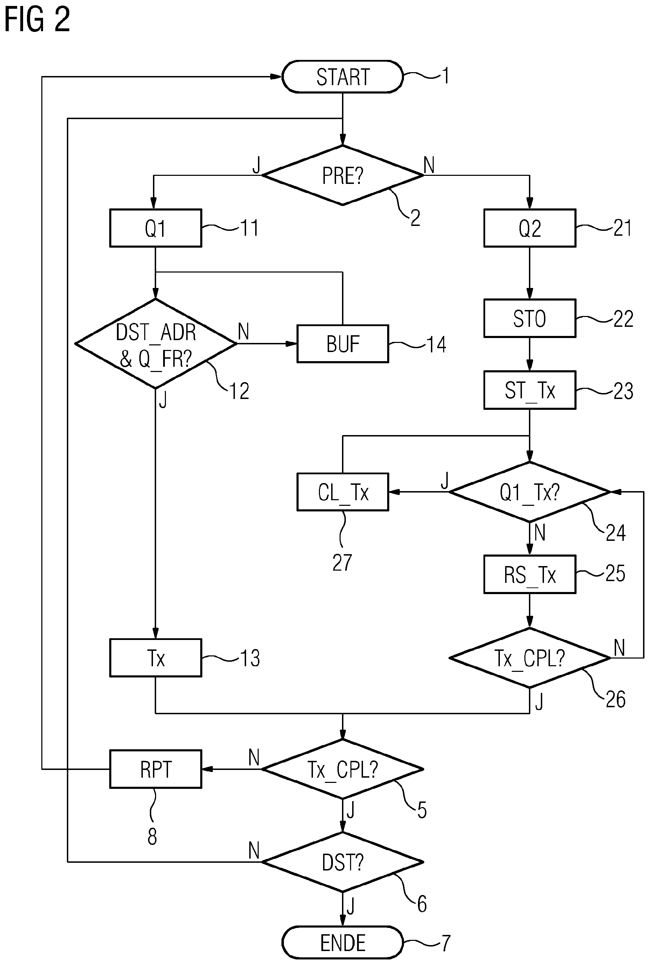

Nach Start einer Übermittlung zeitkritischer Daten (Schritt 1) wird entsprechend Schritt 2 des in Figur 2 dargestellten Ablaufdiagramms überprüft, ob ein mittels Preemption bevorrechtigt zu übermittelnder Frame vorliegt. Je nach Überprüfungsergebnis werden erste Frames 301 in erste Queues (Schritt 11) bzw. zweite Frames 302 in zweite Queues eingefügt (Schritt 21). Entsprechend Schritt 22 werden die zweiten Frames 302 durch die weiterleitenden Kommunikationsgeräte 100 jeweils zur Fehlerüberprüfung zwischengespeichert und erst nach vollständigem fehlerfreien Empfang entsprechend Schritt 23-27 weitergeleitet.

Wenn bereits entsprechend Schritt 23 eine Übermittlung eines zweiten Frames 302 gestartet worden ist und danach ein erster Frame 301 empfangen wird, der über denselben Port 110 weitergeleitet werden soll, wird ein Weiterleiten des zweiten Frames 302 durch das jeweilige weiterleitende Kommunikationsgerät 100 abgebrochen (Schritt 27). Dementsprechend wird nach Start der Übermittlung eines zweiten Frames 302 (Schritt 23) entsprechend Schritt 24 fortlaufend überprüft, ob ein bevorrechtigt zu übermittelnder erster Frame 301 in die erste Queue für den jeweiligen Port 110 eingefügt worden ist. Falls dies zutrifft, erfolgt entsprechend Schritt 27 ein Abbruch des Weiterleitens des zweiten Frames 302. Andernfalls wird das Weiterleiten des zweiten Frames 302 fortgesetzt, insbesondere nach vorherigem Abbruch ausgehend von bereits erfolgreich übermittelten Bestandteilen (Schritt 25). Entsprechend Schritt 26 wird fortlaufend überprüft, ob die Übermittlung des zweiten Frames 302 vollständig abgeschlossen ist. Falls dies noch nicht zutrifft, wird ein Durchlauf der Schritte 24-26 wiederholt. Andernfalls wird entsprechend Schritt 5 empfängerseitig in einem nachfolgenden Netzknoten überprüft, ob der übermittelte zweite Frame 302 korrekt bzw. vollständig empfangen worden ist.

Im vorliegenden Ausführungsbeispiel werden nur die ersten Frames 301 durch die weiterleitenden Kommunikationsgeräte 100 jeweils vor vollständigem Empfang weitergeleitet, sobald eine jeweilige Zieladresse verarbeitbar ist. Hierzu wird jeweils nach Einfügen eines ersten Frames 301 in eine erste Queue (Schritt 11) in Schritt 12 überprüft, ob bereits eine verarbeitbare Zieladresse vorliegt und ob die jeweilige erste Queue frei ist. Falls dies noch nicht zutrifft, erfolgt entsprechend Schritt 14 ein Puffern bereits empfangener Teile des jeweiligen ersten Frames 301. Ist dagegen die Zieladresse verarbeitbar und die erste Queue frei, erfolgt entsprechend Schritt 13 ein im Wesentlichen zwischenspeicherungsfreies Weiterleiten des ersten Frames 301 zu einem nachfolgenden Netzknoten. Dort wird analog zu obigen Ausführungen entsprechend Schritt 5 empfängerseitig überprüft, ob der übermittelte erste Frame 301 korrekt bzw. vollständig empfangen worden ist.

Bei korrektem bzw. vollständigem Empfang eines ersten Frames 301 oder eines zweiten Frames 302 in einem nachfolgenden Netzknoten wird entsprechend Schritt 6 anhand der Zieladresse überprüft, ob dieser Netzknoten Ziel-Knoten für den ersten bzw. zweiten Frame ist. Falls dies zutrifft, wird die Übermittlung des ersten bzw. zweiten Frames entsprechend Schritt 7 abgeschlossen. Liegt entsprechend Schritt 5 ein empfängerseitig erkannter Übermittlungsfehler vor, kann entsprechend Schritt 8 eine erneute Übermittlung angefordert und beispielsweise ein Rücksprung zu Schritt 1 eingeleitet werden.

Die Übermittlung der ersten Frames 301, die die mittels Preemption bevorrechtigt übermittelt werden, kann zusätzlich mittels Time-Aware Shaper, insbesondere gemäß IEEE 802.1Q-2018, gesteuert werden. Dagegen kann die Übermittlung der zweiten Frames 302 mittels Credit-Based Shaper, insbesondere gemäß IEEE 802.1Q-2018, Burst Limiting Shaper, Peristaltic Shaper oder Priority-Based Shaper gesteuert werden. Alternativ hierzu können die zweiten Frames 302 entsprechend Best-Effort-Prinzip übermittelt werden.

Die ersten und zweiten Frames werden vorzugsweise innerhalb vorgegebener Zeitintervalle übermittelt, wobei die vorgegebenen Zeitintervalle an allen Netzknoten synchronisiert werden. Dabei werden die ersten Frames 301 während erster periodischer Zeitintervalle übermittelt, während die zweiten Frames 302 während zweiter periodischer Zeitintervalle übermittelt werden. Zusätzlich können die ersten Frames 301 einer ersten Kategorie zugeordnet werden, für deren Übermittlung erste System-Ressourcen innerhalb des Kommunikationssystems reserviert werden. In entsprechender Weise werden die zweiten Frames 302 vorteilhafterweise einer zweiten Kategorie zugeordnet, für deren Übermittlung zweite System-Ressourcen innerhalb des Kommunikationssystems reserviert werden. Für die Übermittlung der ersten Frames 301 bzw. der zweiten Frames 302 reservierte Ressourcen umfassen beispielsweise nutzbare Übertragungszeitfenster, Bandbreite, zugesicherte maximale Latenz, Queue-Anzahl, Queue-Cache bzw. Adress-Cache in Switches oder Bridges.

## Patentansprüche

1. Verfahren zum Betrieb eines Kommunikationssystems zur Übermittlung zeitkritischer Daten, bei dem
- Datagramme (300) von ersten Kommunikationsgeräten (201) an ersten Netzknoten zu zweiten Kommunikationsgeräten (202-205) an zweiten Netzknoten übermittelt werden,
- erste Datagramme (301) bei ihrer Übermittlung jeweils in erste Sendewarteschlangen sendender und/oder weiterleitender Kommunikationsgeräte (100, 201-205) eingefügt werden (11),
- zweite Datagramme (302) bei ihrer Übermittlung jeweils in zweite Sendewarteschlangen sendender und/oder weiterleitender Kommunikationsgeräte (100, 201-205) eingefügt werden (21),
- ein Weiterleiten der zweiten Datagramme (302) durch die weiterleitenden Kommunikationsgeräte (100) jeweils bei Empfang eines ersten Datagramms (301) abgebrochen (27) und erst nach Weiterleiten des jeweiligen ersten Datagrams fortgesetzt wird (25),
- nur die ersten Datagramme (301) durch die weiterleitenden Kommunikationsgeräte (100) jeweils vor vollständigem Empfang weitergeleitet werden (13), sobald eine jeweilige Zieladresse verarbeitbar ist (12),
- die zweiten Datagramme (302) durch die weiterleitenden Kommunikationsgeräte (100) jeweils vor vollständigem Empfang zwischengespeichert (22) und erst nach vollständigem Empfang weitergeleitet werden (23-27).

2. Verfahren nach Anspruch 1,
bei dem die Datagramme innerhalb vorgegebener Zeitintervalle übermittelt werden und bei dem die vorgegebenen Zeitintervalle an allen Netzknoten synchronisiert werden.

3. Verfahren nach Anspruch 2,
bei dem die ersten Datagramme während erster periodischer Zeitintervalle übermittelt werden und bei dem die zweiten Datagramme während zweiter periodischer Zeitintervalle übermittelt werden.

4. Verfahren nach Anspruch 3,
bei dem die ersten Datagramme einer ersten Kategorie zugeordnet werden, für deren Übermittlung erste System-Ressourcen innerhalb des Kommunikationssystems reserviert werden, und bei dem die zweiten Datagramme einer zweiten Kategorie zugeordnet werden, für deren Übermittlung zweite System-Ressourcen innerhalb des Kommunikationssystems reserviert werden.

5. Verfahren nach einem der Ansprüche 1 bis 4,
bei dem für die Übermittlung der ersten Datagramme und/oder der zweiten Datagramme reservierte Ressourcen nutzbare Übertragungszeitfenster, Bandbreite, zugesicherte maximale Latenz, Queue-Anzahl, Queue-Cache und/oder Adress-Cache in Switches oder Bridges umfassen.

6. Verfahren nach einem der Ansprüche 1 bis 5,
bei dem die Übermittlung der ersten Datagramme mittels Frame Preemption, insbesondere gemäß IEEE 802.1Q-2018, und Time-Aware Shaper, insbesondere gemäß IEEE 802.1Q-2018, gesteuert wird.

7. Verfahren nach einem der Ansprüche 1 bis 6,
bei dem die Übermittlung der zweiten Datagramme mittels Credit-Based Shaper, insbesondere gemäß IEEE 802.1Q-2018, Burst Limiting Shaper, Peristaltic Shaper oder Priority-Based Shaper gesteuert wird oder bei dem die zweiten Datagramme entsprechend Best Effort übermittelt werden.

8. Verfahren nach einem der Ansprüche 1 bis 7,
bei dem die ersten Kommunikationsgeräte über ein Time-Sensitive Network, insbesondere entsprechend IEEE802.3-2018, IEEE 802.1Q-2018, IEEE 802.1AB-2016, IEEE 802.1AS-2011, IEEE 802.1BA-2011 und/oder IEEE 802.1CB-2017, mit den zweiten Kommunikationsgeräten verbunden sind.

9. Verfahren nach einem der Ansprüche 1 bis 8,
bei dem die zweiten Datagramme durch die weiterleitenden Kommunikationsgeräte jeweils zur Fehlerüberprüfung zwischengespeichert und erst nach vollständigem fehlerfreien Empfang weitergeleitet werden.

10. Kommunikationsgerät zur Durchführung des Verfahrens nach einem der Ansprüche 1 bis 9 mit
- mehreren Anschlüssen zur Verbindung mit weiteren Kommunikationsgeräten,
- einem Koppelelement, durch das die Anschlüsse schaltbar miteinander verbindbar sind,
- wobei das Kommunikationsgerät dafür ausgestaltet und eingerichtet ist, Datagramme von ersten Kommunikationsgeräten an ersten Netzknoten zu zweiten Kommunikationsgeräten an zweiten Netzknoten zu übermitteln,
- erste Datagramme bei ihrer Übermittlung jeweils in erste Sendewarteschlangen sendender und/oder weiterleitender Kommunikationsgeräte einzufügen,
- zweite Datagramme bei ihrer Übermittlung jeweils in zweite Sendewarteschlangen sendender und/oder weiterleitender Kommunikationsgeräte einzufügen,
- ein Weiterleiten der zweiten Datagramme durch die weiterleitenden Kommunikationsgeräte jeweils bei Empfang eines ersten Datagramms abzubrechen und erst nach Weiterleiten des jeweiligen ersten Datagrams vollständig fortzusetzen,
- nur die ersten Datagramme durch die weiterleitenden Kommunikationsgeräte jeweils vor vollständigem Empfang weiterzuleiten, sobald eine jeweilige Zieladresse verarbeitbar ist,
- die zweiten Datagramme durch die weiterleitenden Kommunikationsgeräte jeweils vor vollständigem Empfang zwischenzuspeichern und erst nach vollständigem Empfang weiterzuleiten.
